# EUROPEAN PATENT APPLICATION

(11) **EP 2 955 675 A1**
(43) Date of publication of application: **16.12.2015**
(21) Application number: 15171326.0
(22) Date of filing: 10.06.2015
(51) Int. Cl.: G06Q 10/10, G06Q 10/06, G06Q 30/06

(54) **SYSTEMS AND METHODS FOR SCHEDULING MULTI-SKILLED STAFF**

(30) Priority: 10.06.2014 US 201414300961
(71) Applicant: INFRARED INTEGRATED SYSTEMS LTD., Northampton NN4 9BG (GB)
(72) Inventor: Snell, William, Milton Keynes, MK12 5BX (GB); Holliday, Stuart, Northampton, NN7 3QN (GB); Bate, Daniel, Earls Barton, Northamptonshire NN6 0EW (GB)
(74) Representative: Clarke, Jeffrey David

(57) **Abstract**

This disclosure provides systems and methods for generating staffing schedules. Some systems may be configured to generate staffing schedules including a flexible staffing recommendation indicative of a number and a time in which to schedule multi-skilled staff. In some examples, such staffing schedules can be generated based on a demand model generated based on historical demand data and scheduling thresholds.

## Description

Retail outlets often use facilities (e.g., checkouts, registers) to facilitate the purchasing of goods or services. The number of facilities at a retail outlet can vary based on the size of the outlet. For example, large retail outlets may have more facilities to accommodate a higher volume of customers as compared to smaller retail outlets with less customers. Facilities can be opened or closed as necessary to accommodate a current volume of customers. Generally, one employee is required for each open facility. In some situations one employee can operate and keep open multiple facilities, for example when the facilities are self-checkouts which allow customers to ring-up their own transactions.

There are certain challenges with determining the number of facilities to keep open at any given time. For example, keeping too many facilities open can be a waste of resources as the facilities need to be manned by employees. In contrast, having too few facilities open can cause for long wait times for the customers lowering the retail outlet's quality of service. Many retail outlets closely monitor facility queue lengths for quality assurance or marketing purposes (e.g., guaranteeing that facility queue lengths will not exceed a certain number of customers).

Accordingly, there is a need to keep a facility schedule that balances the costs of keeping facilities open with the need to keep facility queues short for customers. These two factors are important considerations in creating a staffing schedule to man the facilities. Staffing schedules generally identify which employees will work on a particular day and specify each employee's role. Because staffing schedules are generally fixed and created weeks in advance, they can be ill equipped to take into account the day-to-day variations in customer volume. This rigidity of traditional staffing schedules can be tempered by scheduling multi-skilled staff, e.g. employees that are trained to perform other duties in the retail outlet in addition to being trained to operate a facility. Because multi-skilled staff have more training than mono-skilled employees, multi-skilled staff often command higher wages. Generally, stores manually schedule multi-skilled staff by some arbitrary rule or policy or require all staff to be multi-skilled. These rules and policies can make it difficult to efficiently schedule staffing for other departments in the retail outlet.

### SUMMARY

This disclosure generally relates to systems and methods for generating a staffing schedule. In certain examples, staffing schedules include a flexible staffing recommendation indicative of a number and a time in which multi-skilled staff should be scheduled. In one example, a scheduling system can include data collectors configured to collect demand data associated with a number of facilities of the scheduling system. In such examples the scheduling system can also include a number of modules stored on a non-transitory computer storage medium including a data collection module, a demand prediction module, and a scheduling module. The data collection module can receive demand data from the data collectors and generate a knowledge base comprising records of historical demand data. In some examples, the demand prediction module can use the knowledge base to generate a demand model indicative of probable customer demand during a scheduling period. In some examples, the scheduling module can use the demand model to generate one or more staffing schedules based on scheduling parameters. The scheduling parameters can include scheduling thresholds indicative of a confidence level that a staffing schedule will meet particular scheduling requirements. In some examples, a composite staffing schedule can be generated using staffing schedules generated based on varying scheduling thresholds, wherein the composite staffing schedule includes a flexible staffing recommendation.

Examples described in this disclose may provide one or more advantages over existing systems and methods to generating staffing schedules. For example, as noted above, staffing schedules generated via disclosed systems and methods can include a flexible staffing recommendation indicative of a number and a time to schedule multi-skilled staff. Multi-skilled staff allows managers of retail outlets to react to day-to-day customer fluctuations by opening facilities when customer volume is high and closing facilities when customer volume is low thereby efficiently utilizing resources (i.e., employee hours). However, scheduling too many multi-skilled staff can be cost prohibitive as the multi-skilled staff can command higher wages than regular staff or may be difficult to schedule effectively because multi-skilled staff are limited in supply. Staffing schedules generated according to disclosed systems and methods balances these factors by determining time periods during which multi-skilled staff would be most useful (e.g., times with a high variation in customer demand). Such a solution can provide for significant cost savings to a retail outlet.

### BRIEF DESCRIPTION OF THE DRAWINGS

The following drawings are illustrative of particular embodiments of the invention and therefore do not limit the scope of the invention. The drawings are not necessarily to scale, unless so stated. Any dimensions indicated on the drawings are approximate, and may only be applicable for the embodiment depicted. The drawings are intended for use in conjunction with the explanations in the following detailed description. Embodiments of the invention will hereinafter be described in conjunction with the appended drawings, wherein like numerals denote like elements.
FIG. 1 is a block diagram illustrating a scheduling system.
FIG. 2 is a flow diagram illustrating a method for generating a staffing schedule.
FIG. 3 is a schematic plan illustrating data collectors deployed in a retail outlet.
FIG. 4 illustrates a chart representative of a demand model generated by a demand prediction module.
FIG. 5 is a flow diagram illustrated a method for generating a staffing schedule.
FIGS. 6A and 6B illustrate charts of staffing schedules.
FIG. 6C illustrates a composite staffing schedule generated from the charts of FIGS. 6A and 6B.
FIG. 7 shows a screenshot illustrating a user interface of a scheduling system displaying a staffing schedule.
FIG. 8 shows a screenshot illustrating a user interface of a scheduling system displaying a staffing schedule.

### DETAILED DESCRIPTION

The following detailed description is exemplary in nature and is not intended to limit the scope, applicability, or configuration of the invention in any way. Rather, the following description provides some practical illustrations for implementing exemplary embodiments of the present invention. Examples of constructions, materials, dimensions, and manufacturing processes are provided for selected elements, and all other elements employ that which is known to those of ordinary skill in the field of the invention. Those skilled in the art will recognize that many of the noted examples have a variety of suitable alternatives.

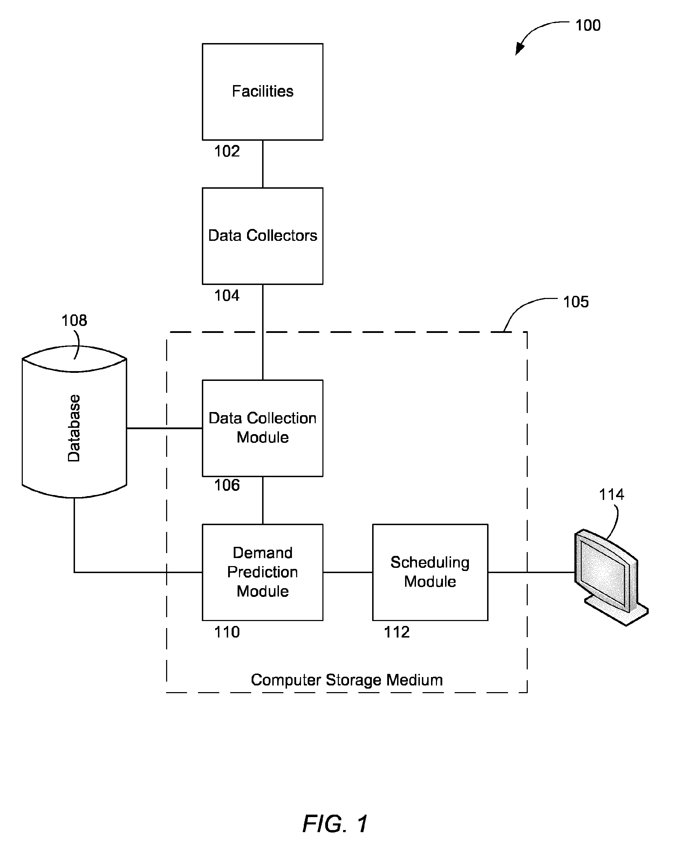

FIG. 1 is a block diagram illustrating a scheduling system 100. Scheduling system 100 can include facilities 102, data collectors 104, computer storage medium 105, database 108, and display 114. Scheduling system 100 can be configured to automatically generate a staffing schedule for facilities 102. Facilities 102 can include any device used to manage and process customer queues, including, but not limited to, ticket barriers, checkouts, and cashiers. Such facilities can be used in various retail outlets including, but not limited to, supermarkets, banks, and department stores. Each facility can be rendered operative or inoperative according to need. For example, a supermarket manager can render a facility operative by assigning an employee to operate the facility. Similarly, a facility can be rendered inoperative, thereby freeing the employee. In such examples, if the employee is multi-skilled staff, the employee can be re-tasked to perform other duties in the supermarket. Generally, scheduling system 100 can be applied to arbitrary scheduling problems relating to resource allocation to meet varying, unplanned changes in demand. For example, scheduling system 100 can also be used in a call or internet processing center to manage facilities for processing telephonic or virtual queues.

Scheduling system 100 can also include one or more data collectors 104. Data collectors 104 can be configured to collect demand data informative of a demand for resources in a store, e.g., queue lengths and wait times associated with facilities 102. Data collectors can include, for example, electronic point of sales machines (e.g., checkouts) and queue length monitors (e.g., cameras, sensors, door people counters). In some examples, a facility, such as checkout, may be adapted to both facilitate transactions as well as collect data. For example, a checkout may be configured to process retail transactions and also record a log oftime-stamped transactions. Commonly owned U.S. Pat. No. 8,615,420 ("Automatic Self-Optimizing Queue Management System"), filed on June 28, 2010, and U.S. Pub. No. 2013/0305261 ("Determining Information Relating to Occupancy of a Space"), filed May 9, 2013, discusses, among other things, systems and methods for collecting demand data and generating staffing schedules based on the demand data and is hereby incorporated by reference herein in its entirety.

Computer storage medium 105 may comprise a non-transient storage medium. In some examples, computer storage medium 105 can be a part of a computing device which may include one or more programmable processors. In some examples, computer storage medium 105 may store computer programming modules including data collection module 106, demand prediction module 110, and scheduling module 112. In such examples, the programming modules may be executable by the one or more programmable processors. The data collection module 106 can be in communication with the data collectors 104 and be adapted to receive demand data from the data collectors 104. The data collection module 106 can also be in communication with database 108 and be adapted to store the demand data in database 108. In some examples, database 108 can comprise one or more databases and can be hosted in any manner as suitable for a particular application of scheduling system 100. For example, database 108 may be hosted on an intranet of a retail outlet, or alternatively hosted in a cloud and accessible via the internet. In some examples, data collection module 106 can be further adapted to combine the demand data into a knowledge base, which includes a record of historical demand. In some examples, data collection module can be adapted to update the knowledge base with new demand data as specified time intervals.

The demand prediction module 110 can be adapted to generate a demand model indicative of future demand for resources of a retail outlet over a given time period. In some examples, the demand model may be generated based on a knowledge base including a historical record of past demand. For example, historical records of demand for a particular day of the week can be informative of future demand for that particular day of the week in the future. Accordingly, in such examples, demand prediction module 110 can generate a demand model which predicts the expected demand for that particular day in the future. Additional features of the demand prediction module 110 are discussed below.

The scheduling module 112 can be adapted to generate a staffing schedule based on a demand model. In some examples, scheduling module 112 can generate a staffing schedule and present it to a user on display 114. In certain examples, the staffing schedule can be adapted to provide a flexible staffing recommendation indicative as a number and a time in which to schedule multi-skilled staff. As noted above, multi-skilled staff can be particularly advantageous in addressing variations in customer demand as they can be selectively tasked with operating checkouts during high-demand periods, then shifted to other tasks during low-demand periods.

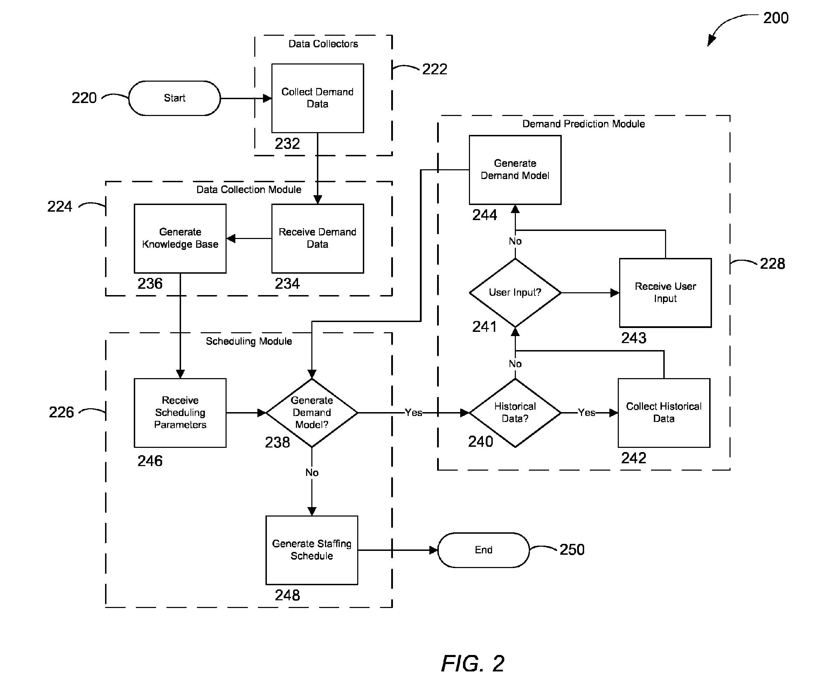

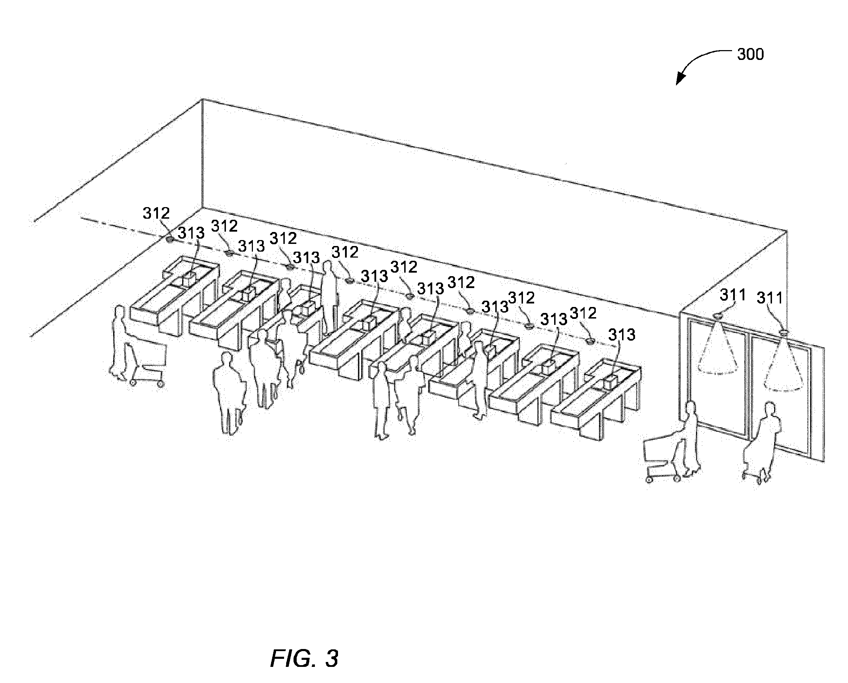

FIG. 2 is a flow diagram illustrating a method 200 for generating a staffing schedule. In some examples, a staffing system (e.g., scheduling system 100 of FIG. 1) can be adapted to perform method 200. Method 200 includes collecting 232 demand data using one or more data collectors 222. As noted above, data collectors 222 can include a variety of devices adapted to collect demand data including, for example, queue lengths of facilities. FIG. 3 is a schematic plan illustrating different types of data collectors, including counting devices, sensors, POS devices, deployed in a retail outlet to collect demand data. In this example, counting device 311 can be mounted near an entrance of the retail outlet to count the number of people entering and leaving the store. A series of sensors 312 can be installed and positioned in close proximity to checkouts to collect demand data indicative of a number of people arriving at the queues. In some examples, sensors 312 can comprise an infrared camera or any other suitable device for monitoring queue lengths. Point of sale (POS) devices 313 can be positioned at checkouts to collect demand data. In some examples, POS devices 313 can be adapted to collect transactional related demand data including, for example, the number of POS transactions made at each checkout and the time taken between transactions. POS devices 313 can also be configured to collect demand data via barcode scanners, pressure sensors, or other sensors which can be used to detect when activity is occurring at a particular POS device.

Referring back to FIG. 2, demand data collected 232 by data collectors 222 can be received 234 by a data collection module 224. As noted above, in some examples, data collection module 224 can be stored on a non-transient storage medium and included in a computing device. The data collection module 224 can then generate 236 a knowledge base based on the received demand data. The form of the knowledge base can vary considerably depending on a particular application of method 200 or the type of demand data received by data collection module 224. In some examples, the knowledge base can comprise the demand data received 234 by data collection module 224 stored in a raw format. In other examples, data collection module 224 can be adapted to process received 234 demand data to determine metrics relevant to demand, for example, average transaction time, average queue length, ratio of customers entering and leaving the store, total number queuing across all checkouts, queue arrivals across all checkouts, and the like.

After generating 236 the knowledge base, scheduling module 226 can receive 246 scheduling parameters. In some examples, scheduling parameters can include scheduling requirements and a scheduling period. The scheduling period can be the time period over which a staffing schedule will be generated (e.g., one business day). Scheduling requirements can be representative of a quality measure of a retail outlet and can include any suitable metric, including, but not limited to, queue lengths and/or queue wait times. For example, a retail outlet may have a goal to maintain queue lengths to less than three people and queue wait times to less than two minutes. In such an example, scheduling module 226 can generate 248 a staffing schedule which takes into account the specified scheduling requirements. In some examples, the scheduling parameters can also include one or more scheduling thresholds. Scheduling thresholds can be particular advantageous in determining when to schedule multi-skilled staff and will be discussed in further detail below.

Scheduling module 226 determines in step 238 whether a demand model should be generated. In some examples, demand prediction module 228 can be adapted to generate 244 a demand model using historical data and/or user input over the scheduling period. In such examples, demand prediction module 228 can determine in steps 240 and 241 whether to incorporate into the demand model historical data or additional user input, respectively. In such examples, the determinations of steps 240 and 241 can be informed by a user prompt and historical data can be collected 242 and/or user input received 243 according to the user's direction. Subsequently, demand prediction module 228 can generate 244 a demand model. In some examples, a demand model can be generated 244 without any historical data or user input where there is an appropriate distributions modelling demand. For example, a demand model can be generated 244 without historical data using the Poisson distribution or the Erlang distribution.

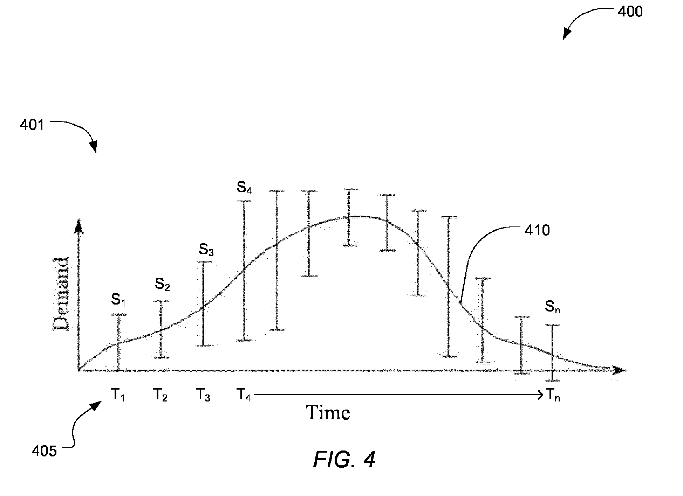

FIG. 4 illustrates a chart 400 representative of a demand model 401 generated by a demand prediction module. In this example, demand model 401 can be indicative of future demand over a time period 405 between time points T₀ and Tₙ. The length of time period 405 typically coincides with the business hours (e.g., one business day) of a retail outlet during which facilities will need to be rendered operative to facilitate customer purchases. It can be appreciated, however, that time period 405 can be of any length as necessary to facilitate the generation of a staffing schedule for a particular retail outlet.

Demand model 401 can include a historical average 410 and standard deviations S₁ through Sₙ. In some examples, the standard deviations are generated by a demand prediction module based on the record of historical data. As noted above, demand model 401 can be informative of probable demand over a specific time period. For example, historical average 410 and standard deviations S₁-Sₙ can be indicative of a probable queue length for checkouts of a retail outlet during time period 405. It is important to note that chart 400 is only representative of demand model 401. In some examples, demand model 401 can be a function D such that for any given T, a corresponding historical average and standard deviation can be derived according to D(T). As such, even though standard deviations S₁-Sₙ, and to lesser extent historical average 410, are illustrated in chart 400 as piecewise, noncontinuous set of points, it should be appreciated that in some examples, all points between To-Tn can be derived from demand model 401 for historical average 410 and standard deviations S₁-Sₙ, respectively.

In this example, standard deviations S₁-Sₙ coincide with time points T₁-Tₙ and can be indicative of a variance in demand over time. For example, the magnitude of standard deviation S₄ as compared to the magnitude of standard deviation S₁ represents that there was a greater variance in demand at time T₄ than at T₂ in the record of historical data. As will be discussed further below, understanding variance in demand can be particularly advantageous when it comes to determining when to schedule multi-skilled staff.

Referring back to FIG. 2, in some examples, for each staffing schedule scheduling module 226 can invoke demand prediction module 228 to generate 244 a distinct demand model. For example, scheduling module 226 may invoke demand prediction module 228 to generate 244 a demand model when generating 248 a staffing schedule for Monday, then invoke the demand prediction module 228 to generate 244 a another demand model when generating 248 a staffing schedule for Tuesday. In some examples, scheduling module 226 can generate 244 a new demand model to incorporate additional pre-existing or new historical demand data from the knowledge base.

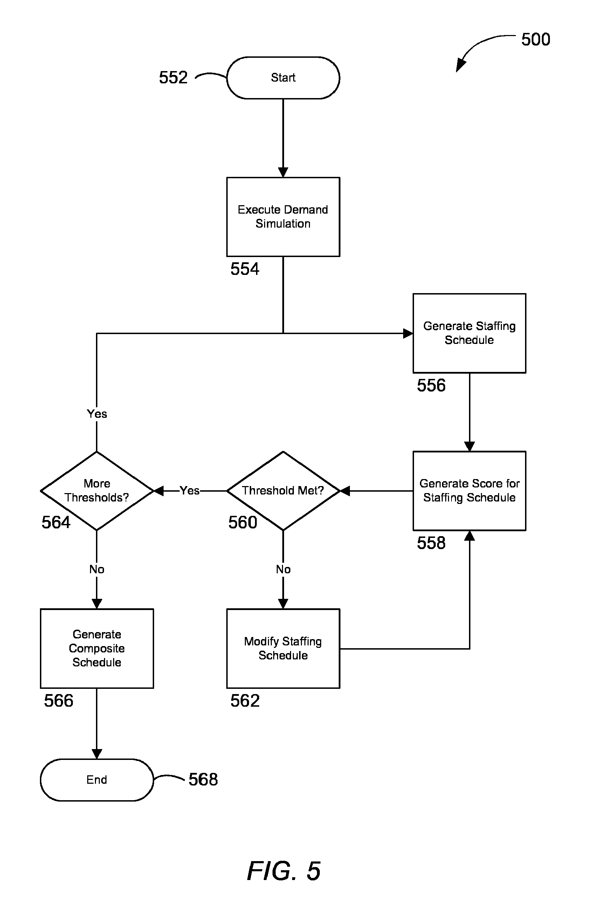

Once a demand model is generated 244, scheduling module 226 can then generate 248 a staffing schedule based on the scheduling parameters and the demand model. FIG. 5 is a flow diagram illustrating a method 500 for generating the staffing schedule. In some examples, a scheduling module (e.g., scheduling module 226 of FIG. 2) can be adapted to perform method 500.

In some examples, a scheduling module can be adapted to execute 554 a demand simulation based on a demand model. In such examples, the demand simulation can include a plurality of simulations each indicative of a probable demand for facilities during a scheduling period. In one example, given a scheduling period of one business day, the scheduling module can run 1000 simulations of that particular business day based on the demand model where each of the simulated days represents a probable demand for that particular day. Demand simulation can comprise known simulation models. For example, the demand simulation can be executed according to the Monte Carlo simulation model and/or the Morris method. In some examples, the demand simulation can be executed according to a randomized simulation based on historical demand. In some examples, a scheduling module can be configured to calculate a probable demand using the Normal distribution. For example, for any particular time T during a scheduling period by combining a historical average of the demand model at time T, a standard deviation of the demand model at time T, and a randomly generated number to produce a probable demand at time T for that particular simulated day. In other examples, a probable demand can be calculated using a mixed model, for example, a Gaussian mixture model. In examples with a knowledge base comprising a large historical data set, a probable demand can be determined by directly sampling the historical data.

After executing 554 the demand simulation, the staffing module can generate 556 a staffing schedule. The staffing schedule is representative of resources over a period of time and is indicative of the amount of resources required to meet a particular demand. In some examples, the resources of the staffing schedule can be represented as a number of required facilities or staff. In some examples, a staffing schedule can be initially generated 556 with no resources (e.g., no operative facilities, no employees staffed) thereby being unfit to meet any amount of customer demand. In such examples, the staffing schedule can be iteratively built by scoring the staffing schedule in step 558, determining if the score meets a scheduling threshold in step 560, modifying the staffing schedule in step 562, then repeating the process by returning to step 558 and scoring the staffing schedule again. In such examples, modifying the staffing schedule in step 562 can include adding resources to the staffing schedule. As method 500 loops through steps 558-562, the staffing schedule can be iteratively built (e.g., resources are added) until the staffing schedule meets the scheduling threshold in step 560.

In some examples, generating 558 a score for the staffing schedule can be based on scheduling requirements (i.e., quality measures including, for example, queue length and/or queue wait times) and the demand simulation. Scheduling requirements can comprise any type of metric by which a "pass" or "fail" determination can be measured. The score can be a percentage of simulations of the demand simulation where the staffing schedule satisfies (e.g., passes) the scheduling requirements for that particular simulation. For example, a retail outlet may have scheduling requirements including a maximum queue length of three customers. In such an example, a staffing schedule satisfies the scheduling requirements for a simulated day if resources of the staffing schedule are sufficient to meet the probable demand of the simulated day without the queue length ever exceeding three customers. This analysis can be performed for each simulated day of the demand simulation to generate a score equivalent to a percentage of simulated days in which the staffing schedule met the scheduling requirements.

In some examples, iteratively building the staffing schedule via steps 558-562 can be streamlined by determining fail points within a staffing schedule and allocating additional resources at the fail points. Fail points within a staffing schedule are time points where the staffing schedule fails to satisfy the scheduling requirements. For example, as part of generating 558 a score, a scheduling module may identify that the staffing schedule fails to meet the scheduling requirements at 3:00 PM in 80% of the simulated days. Accordingly, when modifying 562 the staffing schedule, the scheduling module can allocate additional resources at 3:00 PM in the staffing schedule. In some examples, the scheduling module may be configured to identify a plurality of fail points in generating 558 a score and subsequently allocate resources as necessary to remedy the fail points within the staffing schedule. This feature provides the benefit of reducing the number of iterations through steps 558-562 thereby reducing computational time and use of resources.

As noted above, scheduling requirements can include one or more scheduling thresholds. In some examples scheduling thresholds is a percentage and is representative of a probability in which a staffing schedule will satisfy a particular scheduling requirement. For example, generating a staffing schedule using a scheduling requirement of 60% means the generated staffing schedule is likely to meet the scheduling requirement 60% of the time. Accordingly, in such examples, the scheduling threshold is indicative of a confidence level in which a staffing schedule will meet the scheduling requirements. Referring back to FIG. 5, a staffing schedule is completed (i.e., no longer modified in step 562) once a score of the staffing schedule (i.e., a percentage of simulations where the scheduling requirements is satisfied) is determined to be greater than the scheduling threshold in step 560.

In examples where the scheduling parameters include more than one scheduling threshold, a staffing schedule can be generated for each of the scheduling thresholds. For example, a scheduling module can determine in step 564 whether the scheduling parameters include any additional scheduling thresholds. If there are, then the scheduling module returns to step 556 and generates another staffing schedule.

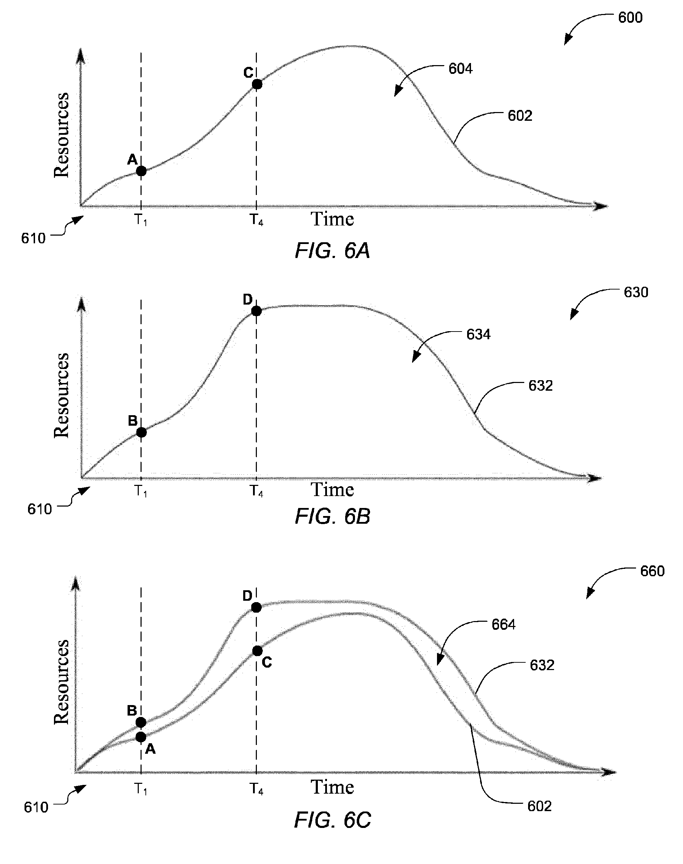

A flexible staffing recommendation can be generated by choosing an appropriate pair of scheduling thresholds, generating a staffing schedule for each scheduling threshold, then generating 566 a composite staffing schedule which can include the flexible staffing recommendation. For example, given first and second scheduling thresholds p1 and p2 where p1 < p2, a flexible staffing recommendation can be calculated as the difference between the staffing schedule which passes with scheduling threshold p1 and the staffing schedule which passes with scheduling threshold p2. FIGS 6A-6C are illustrative of generating a composite staffing schedule including a flexible staffing recommendation using a pair of scheduling thresholds.

FIG. 6A illustrates a chart of staffing schedule 600 which was generated using a scheduling threshold of 50% and a demand simulation executed according to demand model 401 of FIG. 4. FIG. 6B illustrates a chart of staffing schedule 630 which is generated based on the same scheduling parameters as staffing schedule 600 except its scheduling threshold is 90% instead of 50%. As can be expected, the amount of resources of staffing schedule 630, as represented by the area 634 under the curve 632, is greater than the amount of resources allocated to staffing schedule 600, as represented by the area 604 under the curve 602, because more resources are required to meet a confidence level of 90% as compared to a confidence level of 50%. FIG. 6C illustrates a chart representative of a composite staffing schedule 660 which includes a flexible staffing recommendation as represented by the area 664 between curves 602 and 632 of staffing schedules 600 and 630, respectively. Area 664 can be indicative of the time periods where variance in customer demand is probable. As noted above, it can be advantageous to schedule multi-skilled staff during time periods where customer demand is likely to vary because the multi-skilled staff can be tasked to operate a facility when customer demand is high or re-tasked when customer demand is low. For example, customer demand is more likely to vary at time point T₄ as compared to time point T₁ as the distance between points C and D at T₄ is substantially larger than the distance between points A and B at T₁. This variation in customer demand between points T₁ and T₄ can be explained with reference to chart 400 of FIG. 4 where the magnitude of standard deviation S₁ at T₁ is substantially smaller than the magnitude of standard deviation S₄ at T₄. Accordingly, in this example, it is more advantageous to schedule multi-skilled staff at time point T₄ as compared to time point T₁.

Using methods 200 of FIG. 2 and 500 of FIG. 5, a scheduling system can generate staffing schedules for complex cases where the relationship between the demand and an optimal schedule utilizing multi-skilled staff is non-trivial. For example, a retail outlet may have customer demands that vary on the order of seconds but must schedule cashiers to meet the demand in shifts (e.g., 15 minute blocks). Similarly, the methods can be used where satisfying scheduling requirements is non-trivial, for example, to satisfy target queue lengths (absolute or per number of cashiers scheduled) and arrival compliance metrics (e.g., 85% of customers must arrive at a queue length of 2 or less). These complex situations create a complex inter-dependence between the time blocks of a staffing schedule which inhibit a simple or naive solution (e.g., scheduling exactly the number of cashiers to meet a projected, non-varying customer demand).

While methods 200 of FIG. 2 and 500 of FIG. 5 have been described in the context of minimizing total resources used, one skilled in the art can appreciate that the methods can be adapted to minimize peak usage, for example by using historical data indicative of the probability of peak demand. Such scenarios are particular relevant where there is a cost (e.g., investment, setup, maintenance) associated with each unit of resource (e.g., cashier, manufacturing cell, piece of hardware). One skilled in the art will also appreciate that the methods can be adapted to a produce a probabilistic measure of demand for a particular resource and generate a schedule the resource at any number of appropriate levels and obtain a probabilistic measure of satisfying the resource demand.

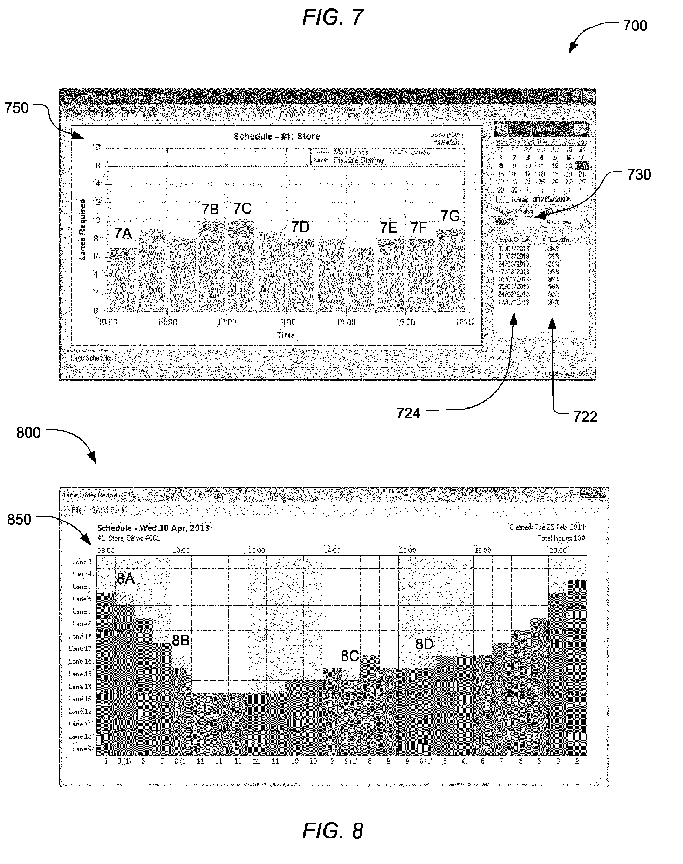

FIG. 7 shows a screenshot illustrating a user interface 700 of a scheduling system displaying a staffing schedule 750. In this example, staffing schedule 750 can be generated using methods 200 and 500 of FIGS. 2 and 5, respectively. Referring to FIG. 7, staffing schedule 750 can include flexible staffing recommendations 7A-G, depicted in staffing schedule 750 as more darkly shaded bars.

A number of other features are also illustrated in user interface 700. For example, panel 720 can display records of historical demand data used to generate staffing schedule 750 as input dates 724. In some examples, only historical data relevant to a scheduling period is used to generate staffing schedule 750. For example, only historical demand data from Sundays are used in generating staffing schedule 750 because the scheduling period of staffing schedule 750 falls on Sunday, April 14, 2013. In some examples, a staffing system can be adapted to automatically determine the input dates used to generate a staffing schedule (e.g., certain days of the week, holidays). In other examples, the staffing system can provide a user the option of selecting relevant input dates. Panel 720 can also display correlation statistics 722 associated with each historical demand data record. In some examples, correlation statistics 722 is expressed a percentage difference between a particular historical record and a demand model generated from a knowledge base. In some examples, a staffing system can be adapted to automatically disregard as abnormalities any input date that is below pre-defined correlation threshold and/or allow the user to selectively choose which particular historical records to disregard. User interface 700 also includes input 730 for receiving a forecast of sales from a user. In this example, the forecast of sales can be used to generate the demand model from which staffing schedule 750 is generated from.

FIG. 8 shows a screenshot illustrating a user interface 800 of a scheduling system displaying a staffing schedule 850. In this example, staffing schedule 850 can be generated using methods 200 and 500 of FIGS. 2 and 5, respectively. Referring to FIG. 8, staffing schedule 850 can include flexible staffing recommendations 8A-8D, depicted with diagonal shading.

Examples provide an automatic facilities scheduling system, comprising a plurality of facilities, one or more databases, one or more data collectors, one or more processors, and one or more computer storage mediums storing computer program modules adapted to execute on the one or more processors, the computer program modules comprising a data collection module adapted to receive demand data from the one or more data collectors and store the demand data to the one or more databases, and produce a knowledge base including a record of historical demand, a demand prediction module adapted to generate a demand model indicative of future demand for the facilities over a time period, and a scheduling module adapted to receive scheduling parameters including scheduling requirements, a first scheduling threshold, a second scheduling threshold, and a scheduling period, invoke the demand prediction module to generate a scheduling demand model during the scheduling period, create a first staffing schedule based on the scheduling requirements, the first scheduling threshold, and the scheduling demand model, create a second staffing schedule based on the scheduling requirements, the second scheduling threshold, and the scheduling demand model, and generate a composite staffing schedule based on the first and second staffing schedules, wherein the composite staffing schedule includes a flex-staff scheduling recommendation.

In some examples, the demand prediction module generates the demand model based on the knowledge base, including the record of historical demand.

In some examples, the scheduling module is further adapted to generate a demand simulation based on the scheduling demand model, the demand simulation including a plurality of simulations each indicative of a probable demand for the facilities over the scheduling period.

In some examples, the scheduling module is adapted to create the first and second staffing schedules by generating the first and second staffing schedules, generating a first schedule score for the first staffing schedule based on the demand simulation and the scheduling requirements, iteratively building the first staffing schedule until the first schedule score satisfies the first scheduling threshold, generating a second schedule score for the second staffing schedule based on the demand simulation and the scheduling requirements, and iteratively building the second staffing schedule until the second schedule score satisfies the second scheduling threshold.

In some examples, the first and second schedule scores are indicative of a percentage of the simulations of the demand simulation that meet the scheduling requirements for the first and second staffing schedules, respectively.

In some examples, the scheduling requirements include a maximum queue length for each of the facilities.

In some examples, the demand simulation is randomized.

In some examples, the demand simulation is a Monte Carlo simulation.

In some examples, the data collection module is configured to update the knowledge base at specified time intervals.

Examples also provide a method for automatically generating a staffing schedule, the method comprising collecting demand data from one or more data collectors, the demand data associated with a demand for a plurality of facilities, generating a knowledge base based on the demand data, the knowledge base including a record of historical demand, receiving the demand data and storing the demand data in one or more databases, receiving scheduling parameters including scheduling requirements, a first scheduling threshold, a second scheduling threshold, and a scheduling period, generating a scheduling demand model indicative of future demand for the facilities during the scheduling period, creating a first staffing schedule based on the scheduling requirements, the first scheduling threshold, and the scheduling demand model, creating a second staffing schedule based on the scheduling requirements, the second scheduling threshold, and the scheduling demand model, and generating a composite staffing schedule based on the first and second staffing schedules, wherein the composite staffing schedule includes a flex-staff scheduling recommendation.

In some examples, the scheduling demand model is generated based on the knowledge base, including the record of historical demand.

Some examples further comprise generating a demand simulation based on the scheduling demand model, the demand simulation including a plurality of simulations each indicative of a probable demand for the facilities over the scheduling period.

In some examples, creating the first staffing schedule comprises generating the first staffing schedule, generating a first schedule score for the first staffing schedule based on the demand simulation and the scheduling requirements, and iteratively building the first staffing schedule until the first schedule score satisfies the first scheduling threshold.

In some examples, creating the first staffing schedule comprises generating the first staffing schedule, generating a first schedule score for the first staffing schedule based on the demand simulation and the scheduling requirements, iteratively building the first staffing schedule until the first schedule score satisfies the first scheduling threshold, and wherein creating the second staffing schedule comprises generating the second staffing schedule, generating a second schedule score for the second staffing schedule based on the demand simulation and the scheduling requirements, and iteratively building the second staffing schedule until the second schedule score satisfies the second scheduling threshold.

In some examples, the first and second schedule scores are indicative of a percentage of the simulations of the demand simulation that meet the scheduling requirements for the first and second staffing schedules, respectively.

In some examples, the scheduling requirements include a maximum queue length for each of the facilities.

In some examples, the demand simulation is randomized.

In some examples, the demand simulation is a Monte Carlo simulation.

Some examples further comprise updating the knowledge base at specified time intervals.

Examples also provide a method for automatically generating a staffing schedule, the method embodied in a set of machine-readable instructions executed on a processor and stored on a tangible medium, the method comprising collecting demand data from one or more data collectors, the demand data associated with a demand for a plurality of facilities, generating a knowledge base based on the demand data, the knowledge base including a record of historical demand, receiving the demand data and storing the demand data in one or more databases, receiving scheduling parameters including scheduling requirements, a first scheduling threshold, a second scheduling threshold, and a scheduling period, generating a scheduling demand model indicative of future demand for the facilities during the scheduling period, creating a first staffing schedule based on the scheduling requirements, the first scheduling threshold, and the scheduling demand model, creating a second staffing schedule based on the scheduling requirements, the second scheduling threshold, and the scheduling demand model, and generating a composite staffing schedule based on the first and second staffing schedules, wherein the composite staffing schedule includes a flex-staff scheduling recommendation.

Various examples of the invention have been described. Although the present invention has been described in considerable detail with reference to certain disclosed embodiments, the embodiments are presented for purposes of illustration and not limitation. Other embodiments incorporating the invention are possible. One skilled in the art will appreciate that various changes, adaptations, and modifications may be made without departing from the scope of the appended claims

## Claims

1. An automatic facilities scheduling system, comprising:
a plurality of facilities;
one or more databases;
one or more data collectors;
one or more processors; and
one or more computer storage mediums storing computer program modules adapted to execute on the one or more processors, the computer program modules comprising
a data collection module adapted to receive demand data from the one or more data collectors and store the demand data to the one or more databases, and produce a knowledge base including a record of historical demand,
a demand prediction module adapted to generate a demand model indicative of future demand for the facilities over a time period, and
a scheduling module adapted to
receive scheduling parameters including scheduling requirements, a first scheduling threshold, a second scheduling threshold, and a scheduling period,
invoke the demand prediction module to generate a scheduling demand model during the scheduling period,
create a first staffing schedule based on the scheduling requirements, the first scheduling threshold, and the scheduling demand model,
create a second staffing schedule based on the scheduling requirements, the second scheduling threshold, and the scheduling demand model, and
generate a composite staffing schedule based on the first and second staffing schedules, wherein the composite staffing schedule includes a flex-staff scheduling recommendation.

2. The system of claim 1, wherein the demand prediction module generates the demand model based on the knowledge base, including the record of historical demand.

3. The system of claim 1, wherein the scheduling module is further adapted to generate a demand simulation based on the scheduling demand model, the demand simulation including a plurality of simulations each indicative of a probable demand for the facilities over the scheduling period.

4. The system of claim 3, wherein the scheduling module is adapted to create the first and second staffing schedules by
generating the first and second staffing schedules,
generating a first schedule score for the first staffing schedule based on the demand simulation and the scheduling requirements,
iteratively building the first staffing schedule until the first schedule score satisfies the first scheduling threshold,
generating a second schedule score for the second staffing schedule based on the demand simulation and the scheduling requirements, and
iteratively building the second staffing schedule until the second schedule score satisfies the second scheduling threshold.

5. The system of claim 4, wherein the first and second schedule scores are indicative of a percentage of the simulations of the demand simulation that meet the scheduling requirements for the first and second staffing schedules, respectively.

6. The system of any preceding claim, wherein the scheduling requirements include a maximum queue length for each of the facilities; and/or
wherein the data collection module is configured to update the knowledge base at specified time intervals

7. The system of claim 3, wherein the demand simulation is randomized, optionally wherein the demand simulation is a Monte Carlo simulation.

8. A method for automatically generating a staffing schedule, the method comprising:
collecting demand data from one or more data collectors, the demand data associated with a demand for a plurality of facilities;
generating a knowledge base based on the demand data, the knowledge base including a record of historical demand;
receiving the demand data and storing the demand data in one or more databases;
receiving scheduling parameters including scheduling requirements, a first scheduling threshold, a second scheduling threshold, and a scheduling period;
generating a scheduling demand model indicative of future demand for the facilities during the scheduling period;
creating a first staffing schedule based on the scheduling requirements, the first scheduling threshold, and the scheduling demand model;
creating a second staffing schedule based on the scheduling requirements, the second scheduling threshold, and the scheduling demand model; and
generating a composite staffing schedule based on the first and second staffing schedules, wherein the composite staffing schedule includes a flex-staff scheduling recommendation.

9. The method of claim 8, wherein the scheduling demand model is generated based on the knowledge base, including the record of historical demand.

10. The method of claim 8, further comprising generating a demand simulation based on the scheduling demand model, the demand simulation including a plurality of simulations each indicative of a probable demand for the facilities over the scheduling period.

11. The method of claim 10, wherein creating the first staffing schedule comprises:
generating the first staffing schedule,
generating a first schedule score for the first staffing schedule based on the demand simulation and the scheduling requirements, and
iteratively building the first staffing schedule until the first schedule score satisfies the first scheduling threshold.

12. The method of claim 10, wherein creating the first staffing schedule comprises:
generating the first staffing schedule,
generating a first schedule score for the first staffing schedule based on the demand simulation and the scheduling requirements,
iteratively building the first staffing schedule until the first schedule score satisfies the first scheduling threshold, and
wherein creating the second staffing schedule comprises:
generating the second staffing schedule
generating a second schedule score for the second staffing schedule based on the demand simulation and the scheduling requirements, and
iteratively building the second staffing schedule until the second schedule score satisfies the second scheduling threshold.

13. The method of claim 12, wherein the first and second schedule scores are indicative of a percentage of the simulations of the demand simulation that meet the scheduling requirements for the first and second staffing schedules, respectively.

14. The method of any of claims 8 to 13, wherein the scheduling requirements include a maximum queue length for each of the facilities.

15. The method of any of claims 8 to 14, further comprising updating the knowledge base at specified time intervals.
